# EUROPEAN PATENT APPLICATION

(11) **EP 4 835 792 A1**
(43) Date of publication of application: **04.11.2026**
(21) Application number: 23962472.9
(22) Date of filing: 26.12.2023
(51) Int. Cl.: G06Q 30/0242

(54) **ADVERTISEMENT EVALUATION SYSTEM AND ADVERTISEMENT EVALUATION METHOD**

(71) Applicant: JTEKT CORPORATION, Kariya-shi, Aichi 448-8652 (JP)
(72) Inventor: UMEZAWA Hiroki, Kariya-shi, Aichi 448-8652 (JP); SHIBATA Yoshiyuki, Kariya-shi, Aichi 448-8652 (JP); NIIMI Masatoshi, Kariya-shi, Aichi 448-8652 (JP)
(74) Representative: TBK
(86) International application number: PCT/JP2023/046648
(87) International publication number: WO 2025/141694

(57) **Abstract**

An advertisement evaluation system includes: a reception unit that receives designation of an evaluation target on which an advertisement is placeable; an acquisition unit that determines an estimated number of people who are estimated to have viewed the evaluation target using a position and motion data aggregate that is an aggregate of position and motion data in which position information of a person is associated with motion information indicating a motion of a head of the person; and a display unit that displays number-of-people information related to the estimated number of people.

## Description

### TECHNICAL FIELD

The present disclosure relates to an evaluation system and an evaluation method.

### BACKGROUND ART

Patent Document 1 discloses a communication system that displays a user's level of interest in an advertisement displayed on a terminal device based on the level of interest. In this communication system, interest level data is created using operations such as click operations performed by the user on the terminal device that displays the advertisement.

### Related Art Documents

### Patent Documents

Patent Document 1: Japanese Unexamined Patent Application Publication No. 2020-184217

### SUMMARY OF THE INVENTION

### Problem to be Solved by the Invention

Unlike advertisements displayed on terminal devices, in a case of outdoor advertisements, target people who view the advertisements cannot be identified. In this case, it is difficult to grasp the number of people who have actually viewed the advertisements.

### Means for Solving the Problem

The present disclosure can be implemented in the following aspects.
(1) According to one aspect of the present disclosure, an advertisement evaluation system is provided. The advertisement evaluation system includes: a reception unit that receives designation of an evaluation target on which an advertisement is placeable; an acquisition unit that determines an estimated number of people who are estimated to have viewed the evaluation target using a position and motion data aggregate that is an aggregate of position and motion data in which position information of a person is associated with motion information indicating a motion of a head of the person; and a display unit that displays number-of-people information related to the estimated number of people. According to the present aspect, even when it is difficult to obtain evidence that the target people who can view the advertisement have actually viewed the evaluation target, the estimated number of people determined by the acquisition unit can be used to grasp the number of people who are estimated to have actually viewed the advertisement. The user can grasp the number of people who are estimated to have actually viewed the advertisement by designating a desired evaluation target and viewing the number-of-people information displayed on the display unit.
(2) In the advertisement evaluation system according to the above aspect, the acquisition unit may perform a first process of setting an evaluation target range around the evaluation target, and a second process of determining, as the estimated number of people, the number of people who are estimated to have viewed the evaluation target among people located in the evaluation target range. According to the present aspect, the processing load can be reduced by limiting the targets for determination of the estimated number of people to the people located in the evaluation target range.
(3) In the advertisement evaluation system according to the above aspect, in the second process, the acquisition unit may divide the evaluation target into a plurality of levels based on a height from a ground, and determine the estimated number of people for each of the plurality of levels, and the display unit may display the number-of-people information for each of the plurality of levels. According to the present aspect, the user can view detailed number-of-people information for each of the plurality of levels. Thus, the user can know at which height the advertisement should be placed.
(4) In the advertisement evaluation system according to the above aspect, the reception unit further receives designation of an evaluation period, and in the second process, the acquisition unit determines, as the estimated number of people, the number of people who are estimated to have viewed the evaluation target among people located in the evaluation target range during the evaluation period. According to the present aspect, the user can view the number-of-people information for the desired evaluation period.
(5) In the advertisement evaluation system according to the above aspect, the acquisition unit may perform a third process of calculating an index ratio by determining a total number of people located in the evaluation target range and dividing the estimated number of people by the total number of people, and the number-of-people information may include the index ratio. According to the present aspect, the user can know the ratio of the people who are estimated to have viewed the evaluation target to the people located in the evaluation target range based on the displayed index ratio.
(6) In the advertisement evaluation system according to the above aspect, the motion information may include information acquired by an angular velocity sensor, and in the second process, the acquisition unit may estimate that the person has viewed the evaluation target when a period during which a value of the angular velocity sensor is within a predetermined reference range is equal to or more than a predetermined reference period after determination is made that a face of the person has been turned to the evaluation target. According to the present aspect, the acquisition unit can estimate that the person has viewed the evaluation target using the information from the angular velocity sensor.
(7) In the advertisement evaluation system according to the above aspect, the estimated number of people may be a first estimated number of people, and the number-of-people information may be first number-of-people information, the acquisition unit may perform an estimation process of determining a second estimated number of people who are estimated to have viewed the evaluation target twice among the people who are estimated to have viewed the evaluation target, and the display unit may display second number-of-people information related to the second estimated number of people. According to the present aspect, the user can know the degree of attention to the evaluation target by viewing the displayed second number-of-people information.
(8) In the advertisement evaluation system according to the above aspect, the display unit may display the index ratio using at least one of a contour diagram and a vector diagram. According to the present aspect, the user can recognize the index ratio more intuitively. The present disclosure can be implemented in various forms such as an advertisement evaluation method and an advertisement evaluation program in addition to the evaluation system described above.

### BRIEF DESCRIPTION OF THE DRAWINGS

[FIG. 1] FIG. 1 is a block diagram showing the configuration of an advertisement evaluation system.
[FIG. 2] FIG. 2 is a diagram illustrating an advertisement to be evaluated.
[FIG. 3] FIG. 3 is a block diagram showing the structure of an ear-attached device and the structure of a mobile terminal device.
[FIG. 4] FIG. 4 is a diagram illustrating detection by a motion sensor.
[FIG. 5] FIG. 5 is a flowchart showing the procedure of an advertisement evaluation process.
[FIG. 6] FIG. 6 is an example of display screens in steps S10, S16, and S18.
[FIG. 7] FIG. 7 is an example of display screens in steps S20 and S24.
[FIG. 8] FIG. 8 is a flowchart showing the procedure of an index ratio calculation process.
[FIG. 9] FIG. 9 is a diagram illustrating step S106.
[FIG. 10] FIG. 10 is a diagram illustrating detected values from the motion sensor.
[FIG. 11] FIG. 11 is an example of display screens in steps S28 and S30.
[FIG. 12] FIG. 12 is a diagram illustrating second to fourth embodiments.
[FIG. 13] FIG. 13 is a first flowchart of an index ratio calculation process according to a sixth embodiment.
[FIG. 14] FIG. 14 is a second flowchart of the index ratio calculation process according to the sixth embodiment.
[FIG. 15] FIG. 15 is a flowchart of an advertisement evaluation process according to a seventh embodiment.
[FIG. 16] FIG. 16 is an example of display screens in steps S50, S54, and S62.
[FIG. 17] FIG. 17 is another embodiment of a display screen of an index ratio.

### MODES FOR CARRYING OUT THE INVENTION

### A. First Embodiment:

### A1. Configuration of Evaluation System:

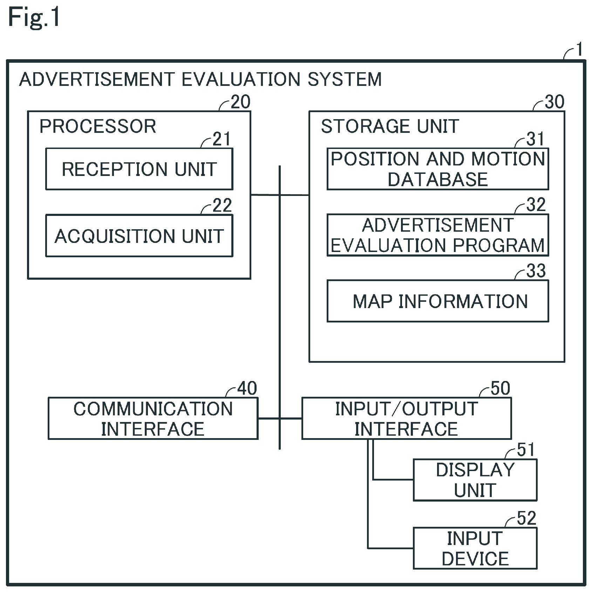

FIG. 1 is a block diagram showing the configuration of an advertisement evaluation system 1. The present embodiment illustrates a case where an advertisement AD to be evaluated by the advertisement evaluation system 1 is an outdoor advertisement. The advertisement to be evaluated by the advertisement evaluation system 1 is not limited to the outdoor advertisement, but may also be an indoor advertisement. Examples of the indoor advertisement include an advertisement fixed to a wall or ceiling inside a commercial facility, and a freestanding advertisement placed in a passageway inside a commercial facility.

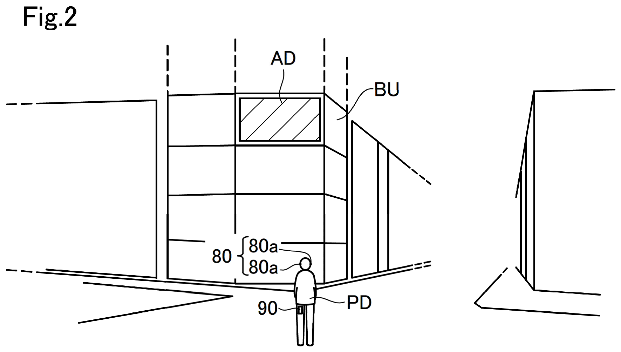

FIG. 2 is a diagram illustrating the advertisement AD to be evaluated by the advertisement evaluation system 1. The advertisement AD is fixed to an outer wall of a building BU having a plurality of floors. The advertisement AD is placed with the aim of being viewed by a passerby PD who is passing by on a road. It is difficult to evaluate how many people have viewed the advertisement. Therefore, the advertisement evaluation system 1 evaluates how many people have viewed the advertisement AD. Further, the advertisement evaluation system 1 evaluates how many people are likely to view the advertisement AD even at locations where the advertisement AD is not placed. The outdoor advertisement is not limited to the advertisement AD placed on the building BU. Examples of the outdoor advertisement include a freestanding advertisement placed on a sidewalk, specifically an advertisement placed at a bus stop.

As shown in FIG. 1, the advertisement evaluation system 1 is configured as a computer in which a processor 20, a storage unit 30, a communication interface 40, and an input/output interface 50 are interconnected by a bus. The input/output interface 50 is connected to a display unit 51 such as a liquid crystal display and an input device 52 such as a keyboard and a mouse.

The processor 20 executes programs stored in the storage unit 30 to perform various processes. The processor 20 includes a reception unit 21 and an acquisition unit 22 as functional units. The reception unit 21 and the acquisition unit 22 are implemented by executing a program stored in the storage unit 30. The storage unit 30 is implemented by memories such as a RAM or a ROM. The storage unit 30 stores a position and motion database 31 serving as a position and motion data aggregate, an advertisement evaluation program 32, and map information 33. The position and motion database 31 is an aggregate of position and motion data in which position information of a person is associated with motion information of the person. The position and motion data is created using position information and motion information acquired by an ear-attached device 80 and a mobile terminal device 90 carried by the passerby PD shown in FIG. 2. The map information 33 includes 2D map information and 3D map information including information on altitude and building height.

As shown in FIG. 2, the ear-attached device 80 is attached to the head of the passerby PD. The ear-attached device 80 includes a pair of housings 80a attached to both ears of the passerby PD. In the present embodiment, the ear-attached device 80 is an earphone device, and each of the pair of housings 80a has a shape in which it can be inserted into an ear canal. The ear-attached device 80 is used to detect a motion of the head of the passerby PD. The shape of the ear-attached device 80 is not limited to the earphone shape, but may be a headphone shape.

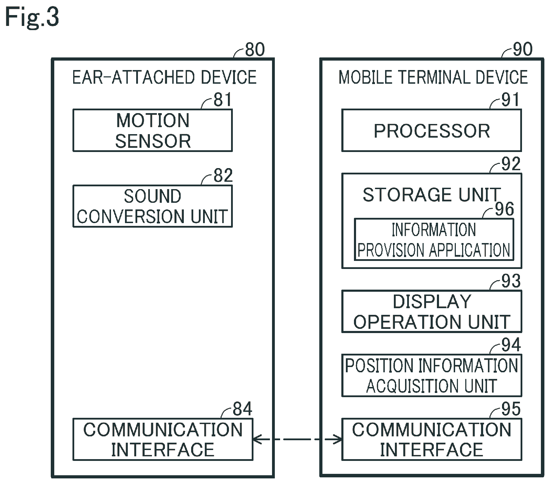

FIG. 3 is a block diagram of the ear-attached device 80 and the mobile terminal device 90. The ear-attached device 80 includes, in the pair of housings 80a shown in FIG. 2, a motion sensor 81, a sound conversion unit 82, and a communication interface 84 shown in FIG. 3. The motion sensor 81 may be built in both of the pair of housings 80a, or may be built in either one of the housings 80a.

The motion sensor 81 detects a motion of the head of the passerby PD. Specifically, the motion sensor 81 is a general-purpose so-called six-axis motion sensor. The motion sensor 81 includes a three-axis acceleration sensor and a three-axis angular velocity sensor. The motion sensor 81 detects an acceleration [m/s²] along each of the three axes and an angular velocity [deg/s] along each of the three axes. The sound conversion unit 82 converts sound data that is an electric signal into sound and emits it toward the ear of the passerby PD.

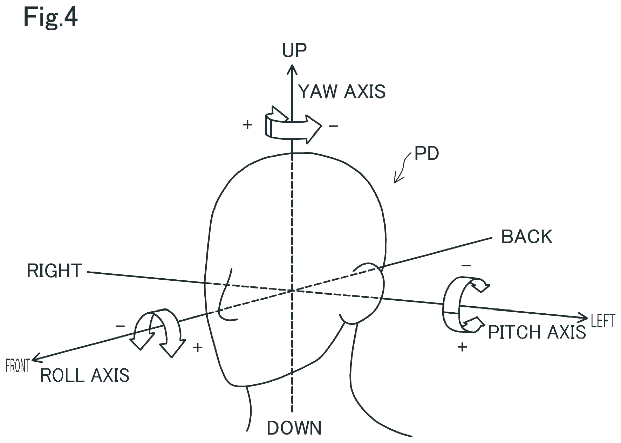

FIG. 4 is a diagram illustrating detection by the motion sensor 81. As shown in FIG. 4, the three axes along which the motion sensor 81 detects each of the acceleration and the angular velocity are specifically a yaw axis, a roll axis, and a pitch axis orthogonal to each other. The yaw axis is an axis parallel to an up-down direction with the passerby PD as the reference. The roll axis is an axis parallel to a front-rear direction with the passerby PD as the reference. The pitch axis is an axis parallel to a right-left direction with the passerby PD as the reference.

For the acceleration on the yaw axis, the motion sensor 81 outputs a positive value when the passerby PD moves his/her head upward, and outputs a negative value when the passerby PD moves his/her head downward. For the acceleration on the roll axis, the motion sensor 81 outputs a positive value when the passerby PD moves his/her head forward, and outputs a negative value when the passerby PD moves his/her head backward. For the acceleration on the pitch axis, the motion sensor 81 outputs a positive value when the passerby PD moves his/her face leftward, and outputs a negative value when the passerby PD moves his/her head rightward. For the angular velocity on the yaw axis, the motion sensor 81 outputs a positive value when the passerby PD turns his/her face rightward, and outputs a negative value when the passerby PD turns his/her face leftward. For the angular velocity on the roll axis, the motion sensor 81 outputs a positive value when the passerby PD tilts his/her head leftward, and outputs a negative value when the passerby PD tilts his/her head rightward. For the angular velocity on the pitch axis, the motion sensor 81 outputs a positive value when the passerby PD turns his/her face downward, and outputs a negative value when the passerby PD turns his/her face upward. Therefore, the motion of the head can be detected from the change in acceleration and the change in angular velocity along each of the three axes.

The communication interface 84 shown in FIG. 3 performs short-range communication with the mobile terminal device 90. In the present embodiment, the communication interface 84 and the mobile terminal device 90 communicate with each other in accordance with Bluetooth (registered trademark). The communication interface 84 is implemented by an electronic circuit etc.

In the present embodiment, the mobile terminal device 90 is a smartphone. The mobile terminal device 90 includes a processor 91, a storage unit 92, a display operation unit 93, a position information acquisition unit 94, and a communication interface 95.

The processor 91 executes programs stored in the storage unit 92 to perform various processes. The storage unit 92 is implemented by memories such as a RAM or a ROM. The storage unit 92 stores an information provision application program 96. The display operation unit 93 includes a touch panel. The display operation unit 93 displays information on the touch panel and receives operations input on the touch panel.

The position information acquisition unit 94 includes a GNSS (Global Navigation Satellite System) receiver (not shown), and receives signals from positioning satellites under the control of the processor 91. In the present embodiment, the position information acquisition unit 94 uses the GPS (Global Positioning System) as the GNSS. The position information acquisition unit 94 may acquire position information using other satellite positioning systems such as the Quasi-Zenith Satellite System. The position information acquisition unit 94 may correct the position information using an acceleration sensor (not shown) provided in the mobile terminal device 90, radio waves from a base station of a mobile communication system, radio waves from an access point of a wireless LAN (Local Area Network), etc.

The communication interface 95 performs short-range communication with the communication interface 84 of the ear-attached device 80. The communication interface 95 communicates with the communication interface 40 of the advertisement evaluation system 1 using a mobile communication system such as 5G (5th Generation Mobile Communication System). The communication method between the communication interface 95 and the communication interface 40 of the advertisement evaluation system 1 is not limited to the mobile communication system, but may be a method using a wireless LAN, or a combination of these may be used. Communication between the ear-attached device 80 and the mobile terminal device 90 is not limited to wireless communication, but may be wired communication.

The processor 91 of the mobile terminal device 90 executes the information provision application program 96 to sequentially transmit position information acquired by the position information acquisition unit 94 and motion information acquired by the motion sensor 81 to the advertisement evaluation system 1. That is, the position information is position information of the passerby PD, that is, a person. The motion information is information indicating a motion of the head of the passerby PD, that is, a person. Specifically, the motion information is a detected value from the motion sensor 81.

The processor 20 of the advertisement evaluation system 1 creates position and motion data by associating the received position information and the received motion information using a date and time. Then, the processor 20 stores the created position and motion data in the position and motion database 31 in a state in which it can be processed.

### A2. Advertisement Evaluation Process:

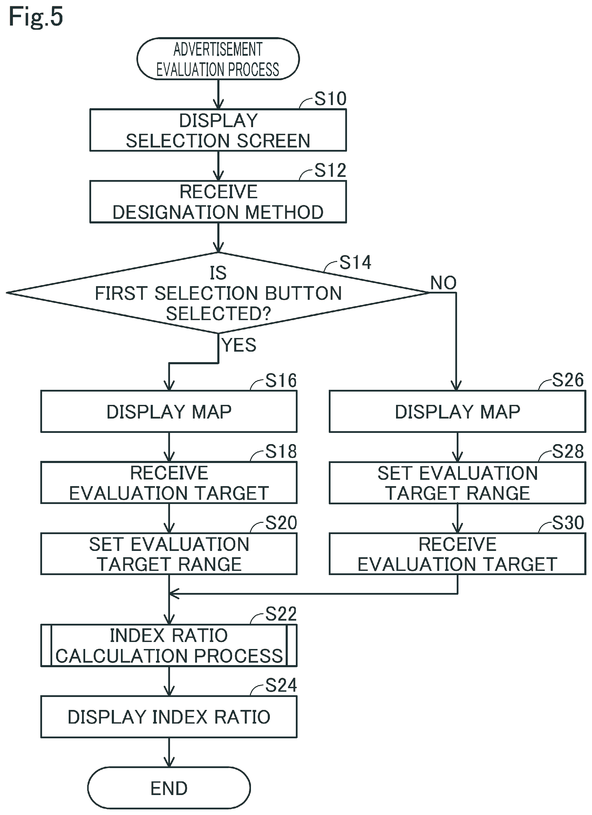

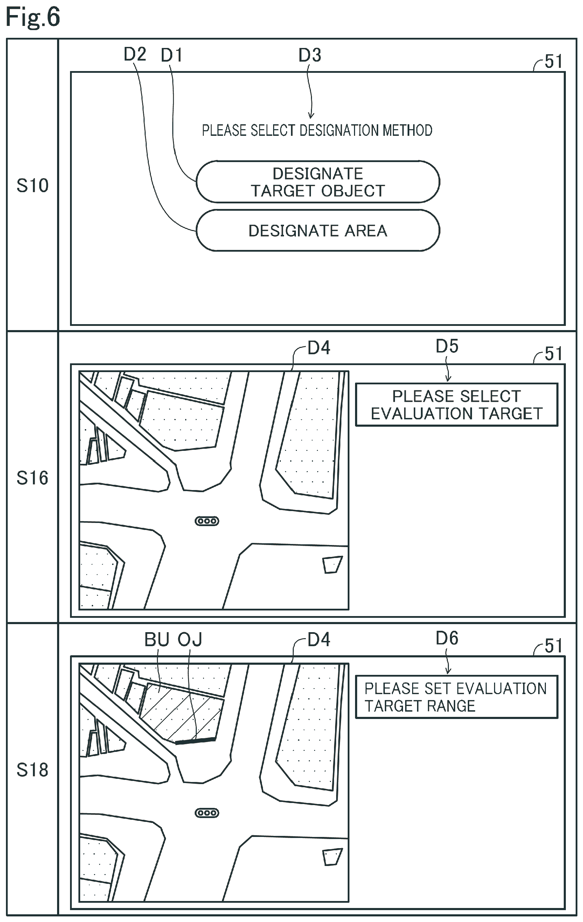

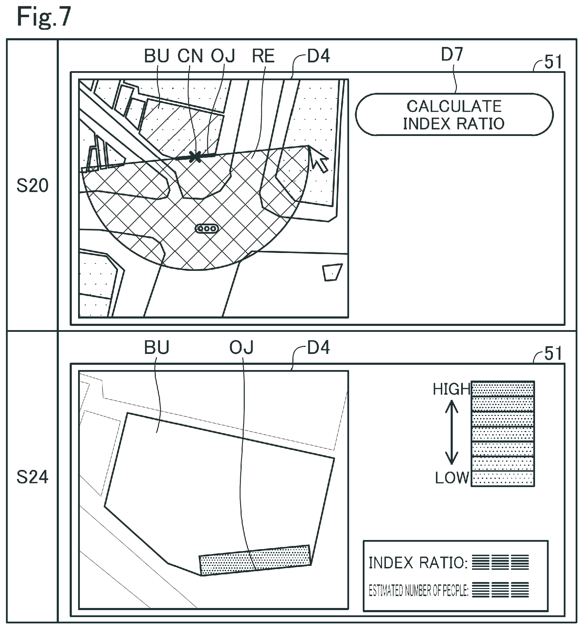

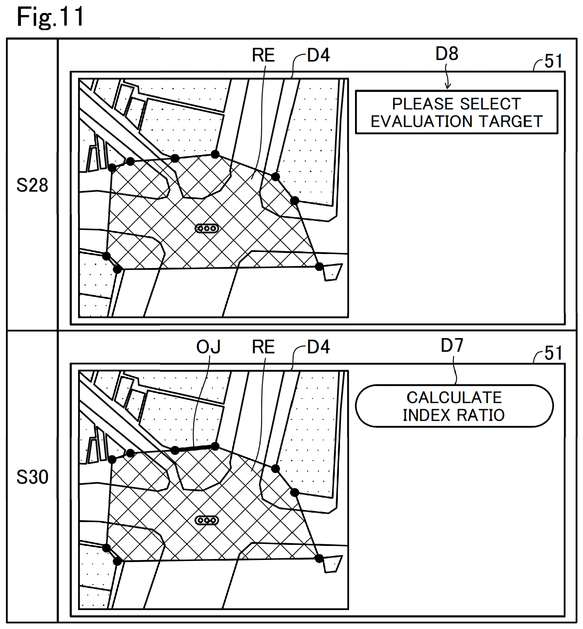

FIG. 5 is a flowchart of an advertisement evaluation process that implements an advertisement evaluation method. FIG. 6 is an example of display screens displayed on the display unit 51 in steps S10, S16, and S18. FIG. 7 is an example of display screens displayed on the display unit 51 in steps S20 and S24. FIG. 11 is an example of display screens displayed on the display unit 51 in steps S28 and S30. In the advertisement evaluation process of the present embodiment, an index ratio Rm is calculated as the ratio of people who have viewed a location where the advertisement AD is planned to be placed among people located around the location where the advertisement AD is planned to be placed. A position range for calculation of the index ratio Rm is referred to as an evaluation target range RE. When a user instructs the processor 20 to start the advertisement evaluation program 32, the processor 20 starts the advertisement evaluation process.

In step S10 in FIG. 5, the reception unit 21 causes the display unit 51 to display a selection screen for receiving a selection of a method for designating an evaluation target OJ. The evaluation target OJ is the location where the advertisement AD is planned to be placed, and is a location where the advertisement AD is placeable. The reception unit 21 receives a spatial area as the evaluation target OJ in addition to an architectural structure such as the building BU. The advertisement AD can be placed even at a location where no architectural structure is currently present. By receiving the spatial area as the evaluation target OJ, the spatial area can also be considered as the location for placement of the advertisement AD.

As shown in "S10" in FIG. 6, the selection screen displays a first selection button D1, a second selection button D2, and a message D3. The message D3 is a message that prompts the user to select either the first selection button D1 or the second selection button D2. The first selection button D1 is typically a selection button that is selected when designating an outer wall of an architectural structure such as the building BU as the evaluation target OJ. The second selection button D2 is a selection button that is selected when designating a spatial area as the evaluation target OJ. The user selects either the first selection button D1 or the second selection button D2.

In step S12 in FIG. 5, the reception unit 21 receives the designation method of the selected first selection button D1 or the selected second selection button D2. In step S14, the reception unit 21 determines whether the first selection button D1 is selected. When determination is made that the first selection button D1 is selected, the reception unit 21 causes, in step S16, the display unit 51 to display a 2D map D4 shown in FIG. 6 using the map information 33. As shown in "S16" in FIG. 6, the display unit 51 displays the map D4 and a message D5 that prompts the user to select the evaluation target OJ. The user selects, as the evaluation target OJ, one outer wall out of the plurality of outer walls of the building BU where the advertisement AD is planned to be placed. The following description will be given taking as an example a case where the user selects one outer wall of the building BU shown in "S18" in FIG. 6 as the evaluation target OJ.

In step S18 in FIG. 5, the reception unit 21 receives the evaluation target OJ selected by the user as an evaluation target OJ for calculation of the index ratio Rm. As shown in "S18" in FIG. 6, the reception unit 21 displays the received evaluation target OJ in a color that is not used on the map D4 in order to increase visibility. Further, the reception unit 21 causes the display unit 51 to display a message D6 that prompts the user to set the evaluation target range RE.

In the present embodiment, as shown in "S20" in FIG. 7, the evaluation target range RE is set as a semicircle about a midpoint CN on a side indicating the outer wall on the map D4 that is the evaluation target OJ. Specifically, the figure shown on the map D4 and corresponding to the evaluation target range RE is a semicircle obtained by dividing a circle about the midpoint CN by an extended straight line of the side of the evaluation target OJ. The evaluation target range RE adjoins the building BU in which the evaluation target OJ is set. The user sets the evaluation target range RE by designating the radius of the evaluation target range RE.

In step S20 in FIG. 5, the acquisition unit 22 sets the set evaluation target range RE as an evaluation target range RE for calculation of the index ratio Rm. The acquisition unit 22 causes the display unit 51 to display a third selection button D7 shown in "S20" in FIG. 7. The third selection button D7 is a selection button that receives the start of calculation of the index ratio Rm. When the user completes setting the evaluation target range RE, the user selects the third selection button D7.

As shown in FIG. 5, when the third selection button D7 is selected, the acquisition unit 22 performs an index ratio calculation process in step S22.

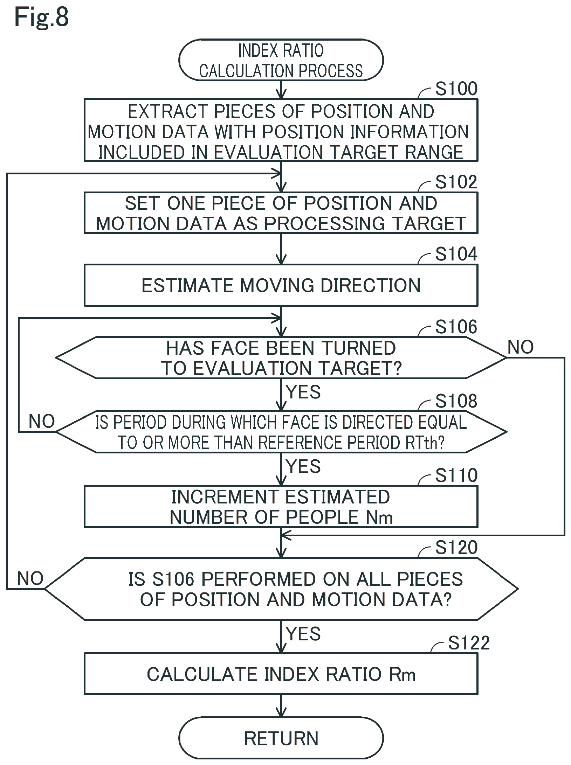

FIG. 8 is a flowchart of the index ratio process. When the index ratio calculation process is started, the acquisition unit 22 sets an estimated number of people Nm that is a variable to be used to count the estimated number of people Nm serving as a first estimated number of people to an initial value of zero. In step S100 in FIG. 8, the acquisition unit 22 extracts pieces of position and motion data with position information included in the evaluation target range RE. The extracted position and motion data is managed as one piece of position and motion data for one passerby PD. Then, position and motion data within a period during which the position information is included in the evaluation target range RE is separated and extracted from the one piece of position and motion data.

In step S102, the acquisition unit 22 sets one of the extracted pieces of position and motion data as position and motion data to be subjected to the subsequent process. In step S104, the acquisition unit 22 estimates a moving direction of the passerby PD using a change over time in the position information included in the position and motion data.

In step S106, the acquisition unit 22 uses an angle on the yaw axis, an angle on the low axis, and an angle on the roll axis in the motion information included in the position and motion data to determine whether the passerby PD has turned his/her face to the evaluation target OJ.

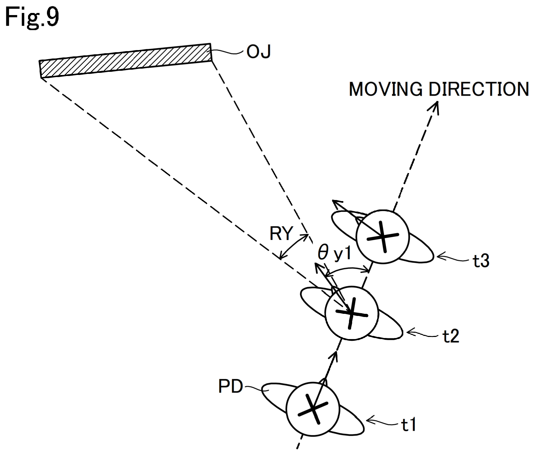

FIG. 9 is a diagram illustrating step S106. FIG. 9 shows a state in which the passerby PD is moving in the moving direction from time t1 to time t3. The acquisition unit 22 assumes that the posture of the passerby PD is a posture in which the front of the face is directed along the moving direction. At times t2 and t3, the passerby PD turns his/her face to the evaluation target OJ. At the position at time t2, a range RY indicated by the angle on the yaw axis within which the evaluation target OJ can be viewed can be determined from the position information and the moving direction. Therefore, when an angle θy1 on the yaw axis is within the range RY, the acquisition unit 22 determines that the passerby PD has turned his/her face to the evaluation target OJ.

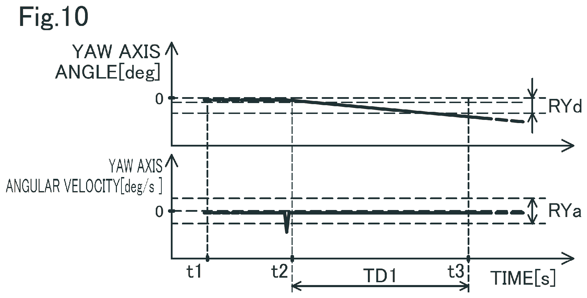

FIG. 10 is a diagram illustrating detected values from the motion sensor 81. From the top to the bottom of FIG. 10, a graph showing the relationship between an angle on the yaw axis and an elapsed period and a graph showing the relationship between an angular velocity on the yaw axis and an elapsed period are shown in this order. The graph showing the relationship between the angle on the yaw axis and time and the graph showing the relationship between the angular velocity on the yaw axis and time are aligned such that the horizontal axes indicate the same time.

FIG. 10 corresponds to FIG. 9. That is, at time t2, the passerby PD turns his/her face to the evaluation target OJ. In step S106, more specifically, the acquisition unit 22 determines that the face direction has been changed when the angular velocity on the yaw axis is outside a predetermined reference range. When the angle θy1 on the yaw axis after the change in face direction is within the range RY, the acquisition unit 22 determines that the passerby PD has turned his/her face to the evaluation target OJ. In addition, when the evaluation target OJ is present ahead in the moving direction of the passerby PD and the face of the passerby PD is directed forward, the acquisition unit 22 determines that the passerby PD has turned his/her face to the evaluation target OJ.

When determination is made in step S106 in FIG. 8 that the passerby PD has turned his/her face to the evaluation target OJ, the acquisition unit 22 determines in step S108 whether the period during which the face is directed is equal to or more than a reference period RTth. As shown in FIG. 10, in the present embodiment, when a period TD1 during which the angular velocity on the yaw axis is within a reference range RYa is equal to or more than a reference period RYth, the acquisition unit 22 determines that the period during which the face is directed is equal to or more than the reference period RYth. The reference range RYa is a range in which the passerby PD can view the evaluation target OJ without changing the face direction, and is predetermined by experiment etc.

When determination is made in step S108 in FIG. 8 that the period during which the face is directed is equal to or more than the reference period RTth, the acquisition unit 22 determines in step S110 that the passerby PD has viewed the evaluation target OJ, and increments the estimated number of people Nm.

When determination is made in step S108 that the period during which the face of the passerby PD is directed is not equal to or more than the reference period RYth, the acquisition unit 22 returns the process to step S106 because there is a possibility that the passerby PD will change the face direction again.

When determination is made in step S106 that the passerby PD has not directed his/her face to the evaluation target OJ, the acquisition unit 22 advances the process to step S120. Cases where determination is made that the passerby PD has not directed his/her face to the evaluation target OJ include a case where the evaluation target OJ is not present ahead in the moving direction of the passerby PD and the passerby PD has not changed the face direction, and a case where the passerby PD has not turned his/her face to the evaluation target OJ.

In step S120, the acquisition unit 22 determines whether the process of at least step S106 is performed on all the pieces of position and motion data extracted in step S100. That is, the acquisition unit 22 determines in step S120 whether the process of determining whether the passerby PD has viewed the evaluation target OJ is performed on all the extracted pieces of position and motion data. When determination is made that step S106 is not performed on all the pieces of position and motion data, the acquisition unit 22 returns the process to step S102 to perform step S106 on the next position and motion data. When determination is made that step S106 is performed, the acquisition unit 22 advances the process to step S122.

In step S122 serving as a third process, the acquisition unit 22 calculates the index ratio Rm. Specifically, the acquisition unit 22 uses the estimated number of people Nm and a total number Na of the pieces of position and motion data extracted in step S100 to determine the index ratio Rm using the following expression (1).$Rm = Nm / Na$ (1) The total number Na of the pieces of position and motion data extracted in step S100 is the total number of people located in the evaluation target range RE. By determining the index ratio Rm, the number of people located in the separately acquired evaluation target range RE can be multiplied by the index ratio Rm to separately determine the number of people who are estimated to have viewed the evaluation target OJ. Therefore, information on people with no ear-attached devices 80 cannot be acquired, but the number of people who are estimated to have viewed the evaluation target OJ can be separately determined using the index ratio Rm. As the information on the number of people located in the separately acquired evaluation target range RE, for example, information collected by a base station of a mobile communication system can be used. After step S122 is performed, the acquisition unit 22 ends the current processing routine.

In step S24 in FIG. 5, the acquisition unit 22 causes the display unit 51 to display the index ratio Rm serving as number-of-people information and first number-of-people information. In the present embodiment, as shown in "S24" in FIG. 7, the index ratio Rm is shown by a contour diagram on the map D4. The contour diagram of the present embodiment is a diagram in which the color changes continuously from a high value of the index ratio Rm to a low value of the index ratio Rm. Specifically, in the present embodiment, the color corresponding to a high value of the index ratio Rm is displayed in "red," and the color corresponding to a low value of the index ratio Rm is displayed in "blue." Thus, the user can intuitively grasp whether the index ratio Rm is high or low. The index ratio Rm corresponding to a high value and the index ratio Rm corresponding to a low value on the contour diagram are set as appropriate using, for example, statistics. The acquisition unit 22 causes the display unit 51 to display the value of the index ratio Rm and the estimated number of people Nm serving as the number-of-people information in addition to the contour diagram. Thus, the user can know the number of people who are estimated to have viewed the advertisement AD placed on the evaluation target OJ, and the number of people who are expected to view the advertisement AD when the advertisement AD is placed on the evaluation target OJ.

When determination is made in step S14 in FIG. 5 that the first selection button D1 is not selected, the reception unit 21 causes, in step S26, the display unit 51 to display the map D4 and a message that prompts the user to set the evaluation target range RE. The user sets a range in which the advertisement AD is planned to be placed by designating points on the map D4. The following description will be given taking as an example a case where the user selects a crosshatched range shown in "S28" in FIG. 11 as the evaluation target range RE.

In step S28 in FIG. 5, the acquisition unit 22 sets the evaluation target range RE set by the user as an evaluation target range RE for calculation of the index ratio Rm. As shown in "S28" in FIG. 11, the reception unit 21 causes the display unit 51 to display a message D8 that prompts the user to select the evaluation target OJ. The user selects one side of the polygonal evaluation target range RE as the evaluation target OJ.

In step S30 in FIG. 5, the reception unit 21 receives the evaluation target OJ selected by the user as an evaluation target OJ for calculation of the index ratio Rm. The reception unit 21 causes the display unit 51 to display the third selection button D7 as shown in "S30" in FIG. 11. When the user completes setting the evaluation target range RE, the user selects the third selection button D7. When the third selection button D7 is selected, the acquisition unit 22 advances the process to step S22. The process from step S22 onwards is performed in the same manner as in the case where the first selection button D1 is selected, and therefore description thereof will be omitted.

Steps S18 and S30 shown in FIG. 5 are also referred to as step (a). Steps S20 and S28 are also referred to as a first process. The process from step S100 to step S120 shown in FIG. 8 is also referred to as a second process or step (b). Step S122 is also referred to as the third process. Step S24 shown in FIG. 5 is also referred to as step (c).

According to the first embodiment described above, the advertisement evaluation system 1 includes the reception unit 21, the acquisition unit 22, and the display unit 51. The reception unit 21 receives the designation of the evaluation target OJ. The acquisition unit 22 uses the position and motion database 31 to determine the estimated number of people Nm. The display unit 51 displays the index ratio Rm serving as the number-of-people information. Thus, the user can grasp the number of people who are estimated to have actually viewed the advertisement AD using the estimated number of people Nm determined by the acquisition unit 22. The user can grasp the number of people who are estimated to have actually viewed the advertisement AD by designating a desired evaluation target OJ and viewing the index ratio Rm displayed on the display unit 51.

The acquisition unit 22 sets the evaluation target range RE in steps S20 and S28. Then, the acquisition unit 22 determines, as the estimated number of people Nm, the number of people who are estimated to have viewed the evaluation target OJ among the people located in the evaluation target range RE. Thus, it is possible to reduce the load of the process performed by the acquisition unit 22 to determine the estimated number of people Nm.

The acquisition unit 22 calculates the index ratio Rm in step S122. In step S24, the display unit 51 displays the index ratio Rm. Thus, the user can know the ratio of the people who are estimated to have viewed the evaluation target range RE to the people located in the evaluation target range RE.

After determination is made in step S106 that the person has turned his/her face to the evaluation target OJ, the acquisition unit 22 estimates in step S108 that the person has viewed the evaluation target OJ when the period during which the value of the angular velocity sensor is within the reference range RYa is equal to or more than the reference period RTth. Thus, the acquisition unit 22 can estimate that the person has viewed the evaluation target OJ using the information from the angular velocity sensor.

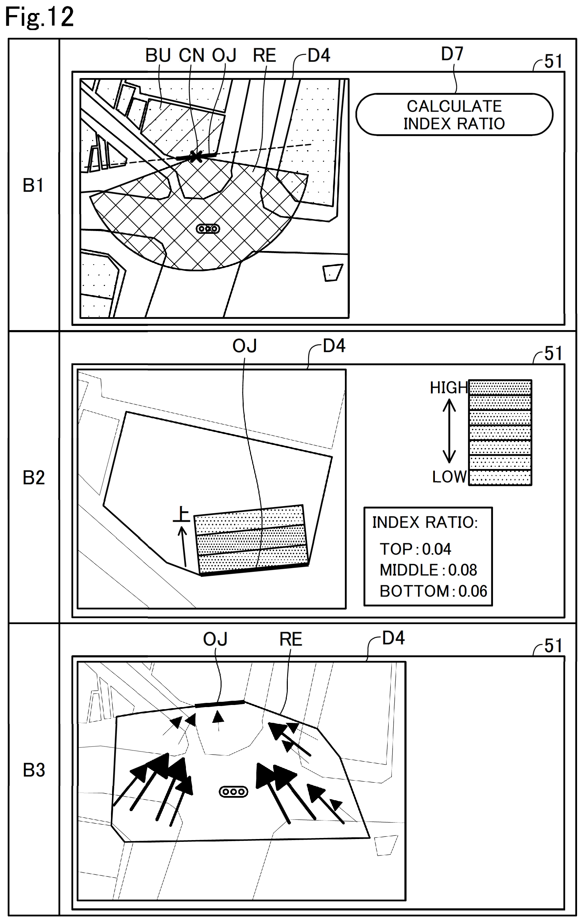

Second to sixth embodiments described below are modifications of the first embodiment. The differences from the first embodiment will be described, and the same aspects will not be described. The same components and processing steps as those in the first embodiment are denoted by the same reference numerals, and detailed description thereof will be omitted as appropriate. FIG. 12 is a diagram illustrating the second to fourth embodiments.

### B1. Second Embodiment (Other Embodiment of Evaluation Target Range):

The shape of the evaluation target range RE set on the map in step S20 is a semicircle. In another embodiment, the evaluation target range RE may have a shape of a sector as shown in "B1" in FIG. 12. The central angle of this sector is, for example, 150 degrees. This sector is a figure that is symmetrical with respect to a line that passes through the midpoint CN in the 2D map display and is perpendicular to the straight line passing through the evaluation target OJ. Thus, it is possible to reflect the actual situation in which the passerby PD located on the same straight line as that of the evaluation target OJ in a plan view has difficulty in viewing the evaluation target OJ. The evaluation target range RE may also have a polygonal shape. Further, the user may be allowed to select a semicircle, a sector, or a polygon as the figure indicating the evaluation target range RE.

### B2. Third Embodiment (Other Embodiment of Index Ratio Calculation Process):

In the index ratio calculation process in step S22, for example, one index ratio Rm is determined for one outer wall of the building BU. In the present embodiment, in step S22, the acquisition unit 22 divides the evaluation target OJ into a plurality of levels based on the height from the ground, and determines the estimated number of people Nm for each of the plurality of levels. In the present embodiment, the acquisition unit 22 divides the building BU into top, middle, and bottom levels, and calculates the index ratio Rm for each level. More specifically, in step S106 in FIG. 8, the acquisition unit 22 uses the angle on the pitch axis in addition to the angle on the yaw axis included in the motion information to determine which level of the evaluation target OJ is viewed by the passerby PD. Then, in step S108 in FIG. 8, the acquisition unit 22 uses the angular velocity on the pitch axis in addition to the angular velocity on the yaw axis to determine whether the period during which the face of the passerby PD is directed is equal to or more than the reference period RTth. In step S108, the acquisition unit 22 estimates that the person has viewed the evaluation target OJ when the periods during which the values of the two angular velocity sensors are within the reference range are equal to or more than the reference period RTth.

In the present embodiment, in step S24 in FIG. 5, the display unit 51 displays the index ratio Rm for each layer as shown in "B2" in FIG. 12. Thus, the user can know at which height the passerby PD is likely to view the evaluation target OJ. The terms "top," "middle," and "bottom" shown in "B2" in FIG. 12 correspond to the top, middle, and bottom levels of the building BU, respectively.

### B3. Fourth Embodiment (Other Embodiment of Index Ratio Calculation Process):

In the advertisement evaluation process of the first embodiment, the reception unit 21 receives the evaluation target OJ and the evaluation target range RE. In the present embodiment, the reception unit 21 receives an evaluation period in addition to the evaluation target OJ and the evaluation target range RE. The user inputs a desired evaluation period for calculation of the index ratio Rm. The evaluation period is, for example, a seasonal period such as a month of August or a time frame from 9:00 to 17:00. In the present embodiment, in step S101 shown in FIG. 8, the acquisition unit 22 extracts pieces of position and motion data for the received period with position information included in the evaluation target range RE. Thus, the user can view the index ratio Rm for the desired evaluation period.

### B4. Fifth Embodiment (Other Embodiment of Display Method):

In the first embodiment, the index ratio Rm is displayed using a contour diagram. In the present embodiment, as shown in "B3" in FIG. 12, the index ratio Rm is displayed using a vector diagram. The vector diagram is a diagram in which the index ratio Rm is displayed using vectors. As the magnitude of the vector displayed on the display unit 51 increases, the estimated number of people Nm increases. The direction of the vector displayed on the display unit 51 is a direction from each of the plurality of areas to the evaluation target OJ. The color of the vector displayed on the display unit 51 may be changed according to the value of the index ratio Rm. Specifically, the acquisition unit 22 divides the values of the index ratio Rm into a plurality of sections. The colors corresponding to the plurality of sections are predetermined to differ from each other. The acquisition unit 22 displays the vector in a color corresponding to the section that includes the value of the target index ratio Rm. Thus, the color of this vector is differentiated depending on whether the index ratio Rm is high or low. In the present embodiment, the evaluation target range RE is divided into a plurality of areas, and the estimated number of people Nm and the index ratio Rm are determined for each area. Then, on the map D4, a vector corresponding to the determined index ratio Rm is displayed at the position of each of the plurality of areas. Thus, the user can recognize the index ratio Rm more intuitively.

### B5. Sixth Embodiment (Other Embodiment of Index Ratio Calculation Process):

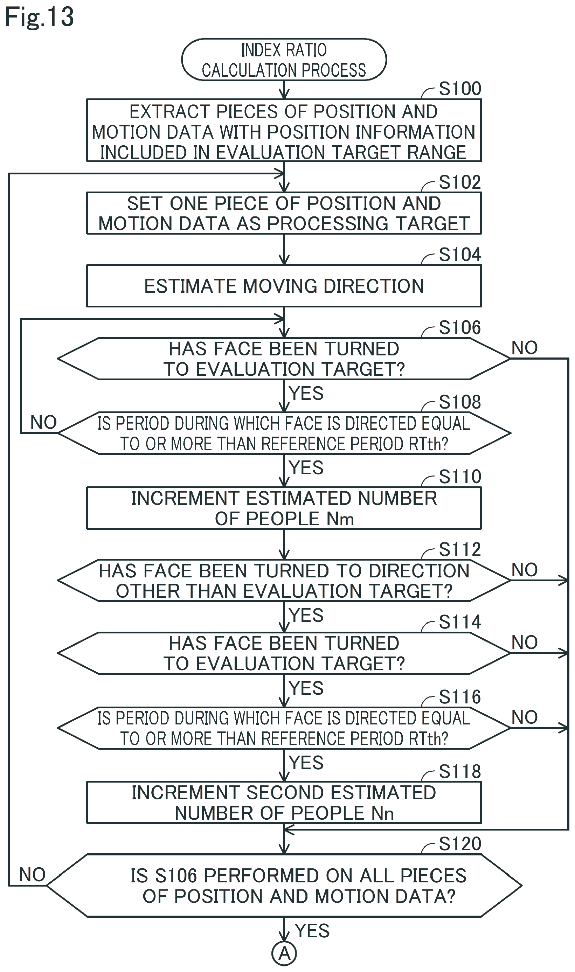

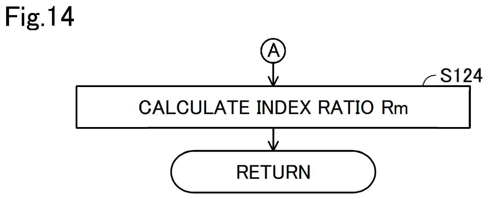

FIGS. 13 and 14 are flowcharts of an index ratio calculation process according to the present embodiment. In the present embodiment, when the passerby PD has turned his/her face to the evaluation target OJ, determination is further made as to whether the passerby PD has viewed the evaluation target OJ twice. In the present embodiment, a second estimated number of people Nn that is a variable is used. The second estimated number of people Nn is set to an initial value of zero after the index ratio calculation process is started.

As shown in FIG. 13, after steps S100 to S110 are performed, the acquisition unit 22 determines in step S112 whether the passerby PD has turned his/her face to a direction other than the evaluation target OJ. In step S112, when the acceleration on the yaw axis is beyond the reference range RYa, the acquisition unit 22 determines that the passerby PD has turned his/her face to a direction other than the evaluation target OJ.

When determination is made that the passerby PD has turned his/her face to a direction other than the evaluation target OJ, the acquisition unit 22 determines in step S114 whether the passerby PD has turned his/her face to the evaluation target OJ, as in step S106. When determination is made that the passerby PD has turned his/her face to the evaluation target OJ, the acquisition unit 22 determines in step S116 whether the period during which the face is directed is equal to or more than the reference period RTth, as in step S108. When determination is made that the period during which the face is directed is equal to or more than the reference period RTth, determination is made that the passerby PD has viewed the evaluation target OJ twice. Therefore, the acquisition unit 22 increments the second estimated number of people Nn in step S118.

The acquisition unit 22 performs step S120 and step S124 shown in FIG. 14 in the same manner as in the first embodiment. When determination is made in step S112 that the passerby PD has not turned his/her face to a direction other than the evaluation target OJ, the acquisition unit 22 advances the process to step S120. When determination is made in step S114 that the passerby PD has not turned his/her face to the evaluation target OJ, the acquisition unit 22 advances the process to step S120. When determination is made in step S116 that the period during which the face is directed is not equal to or more than the reference period RTth, the acquisition unit 22 advances the process to step S120.

In the present embodiment, in step S24 shown in FIG. 5, the acquisition unit 22 causes the display unit 51 to display the index ratio Rm and also causes the display unit 51 to display the second estimated number of people Nn serving as second number-of-people information. Further, the acquisition unit 22 assigns a rank to the second estimated number of people Nn and displays the assigned rank. The rank is assigned using, for example, a value calculated by dividing the second estimated number of people Nn by the estimated number of people Nm. The ranks are assigned, for example, as "A," "B," and "C" in descending order of the second estimated number of people Nn. The second number-of-people information displayed on the display unit 51 is not limited to the second estimated number of people Nn and the rank, but may be, for example, a ratio calculated by dividing the second estimated number of people Nn by the total number Na, or the second estimated number of people Nn. The process from step S112 to step S118 is also referred to as an estimation process.

According to the sixth embodiment described above, the acquisition unit 22 determines the second estimated number of people Nn indicating the number of people who are estimated to have viewed the evaluation target OJ twice. The display unit 51 displays the second estimated number of people Nn and the rank. When a person has viewed the evaluation target OJ twice, the evaluation target OJ can be regarded as attracting attention. Therefore, the user can know the degree of attention to the evaluation target OJ by viewing the displayed second estimated number of people Nn and the displayed rank.

### C. Seventh Embodiment:

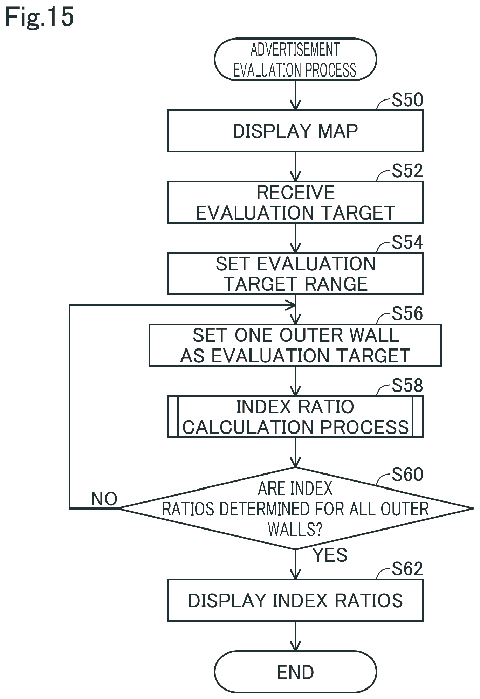

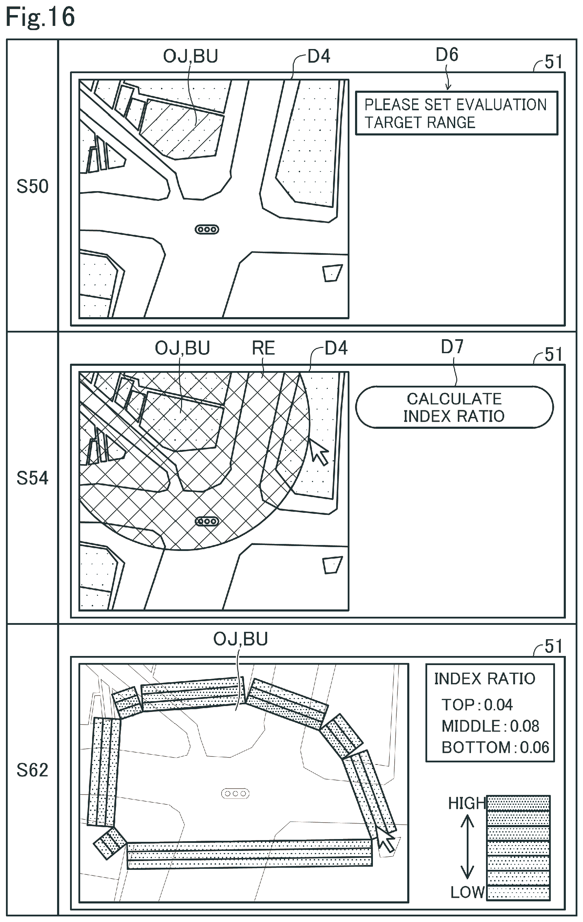

FIG. 15 is a flowchart of an advertisement evaluation process according to the present embodiment. FIG. 16 is an example of display screens in steps S50, S54, and S62. In the first embodiment, the evaluation target OJ is, for example, one outer wall of the building BU. In the present embodiment, the evaluation target OJ is every outer wall of the building BU. The same components and processing steps as those in each of the above embodiments are denoted by the same reference numerals, and detailed description thereof will be omitted as appropriate.

In step S50 shown in FIG. 15, the reception unit 21 causes the display unit 51 to display the map D4 and a message that prompts the user to select the evaluation target OJ. The user selects the building BU as the evaluation target OJ. The following description will be given taking as an example a case where the user selects the building BU shown in "S50" in FIG. 16 as the evaluation target OJ.

In step S52 in FIG. 15, the reception unit 21 receives the evaluation target OJ selected by the user as an evaluation target OJ for calculation of the index ratio Rm. As shown in "S50" in FIG. 16, the reception unit 21 causes the display unit 51 to display the message D6 that prompts the user to set the evaluation target range RE.

In the present embodiment, as shown in "S54" in FIG. 16, the evaluation target range RE is set as a circle about the evaluation target OJ. The user sets the evaluation target range RE by designating the radius of the evaluation target range RE.

In step S54 in FIG. 15, the acquisition unit 22 sets the set evaluation target range RE as an evaluation target range RE for calculation of the index ratio Rm. The acquisition unit 22 causes the display unit 51 to display the third selection button D7 shown in "S54" in FIG. 16. When the user completes setting the evaluation target range RE, the user selects the third selection button D7.

When the third selection button D7 is selected, the acquisition unit 22 sets, in step S56, one of the plurality of outer walls of the building BU that is the evaluation target OJ as the processing target for the index ratio calculation process. In step S58, the acquisition unit 22 performs the index ratio calculation process in the same manner as in the first embodiment. In step S60, the acquisition unit 22 determines whether the index ratios Rm are determined for all the outer walls.

When determination is made in step S60 that the index ratios Rm are not determined for all the outer walls, the acquisition unit 22 returns the process to step S56 to determine the index ratio Rm for the next outer wall. When determination is made in step S60 that the index ratios Rm are determined for all the outer walls, the acquisition unit 22 causes the display unit 51 to display the index ratios Rm in step S62. After step S62 is performed, the current processing routine ends.

"S62" in FIG. 16 is an example of the display screen displayed in step S62. "S62" in FIG. 16 shows a display screen that is displayed when the index ratios Rm are determined for a plurality of levels as in the third embodiment. According to the present embodiment, it is possible to know the index ratios Rm for the plurality of outer walls of the building BU. In the present embodiment as well, the display unit 51 displays the index ratios Rm. in the present embodiment, however, among the plurality of index ratios Rm corresponding to the plurality of outer walls, only the index ratio Rm for the outer wall where a cursor indicating the position of the mouse that is the input device 52 on the display unit 51 is located is displayed. Thus, the user can easily view the desired index ratio Rm.

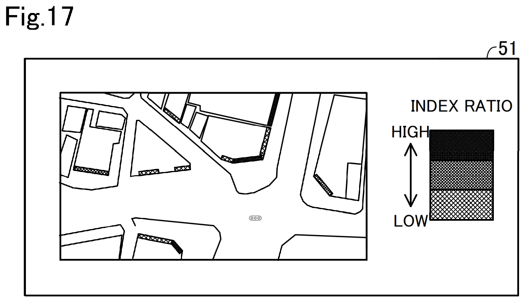

FIG. 17 is another embodiment of the display screen of the index ratio Rm. In the above embodiments, one building BU is received as the evaluation target OJ, and the index ratio Rm is calculated. In another embodiment, the index ratios Rm may be determined for all the outer walls of all the buildings BU included in the evaluation target range RE without prompting the user to designate the evaluation target OJ. FIG. 17 shows a display screen of the index ratios Rm in this case. The display screen in FIG. 17 does not display all the calculated index ratios Rm, but displays only outer walls with index ratios Rm more than an average value of all the index ratios Rm. Thus, the user can recognize which outer walls have large index ratios Rm. The index ratio Rm is displayed using a contour diagram. That is, the index ratio Rm is displayed in different colors depending on whether it is high or low. Thus, the user can intuitively grasp whether the index ratio Rm is high or low.

### D. Other Embodiments:

(D1) In the first embodiment, the device equipped with the motion sensor 81 is the ear-attached device 80. The device equipped with the motion sensor 81 is not limited to a device attached to the ear of the passerby PD, but may be a device attached to the head of the passerby PD. Specifically, the device equipped with the motion sensor 81 may be a device attached to the head of the passerby PD or a device attached over the eyes of the passerby PD.

(D2) In the first embodiment, the device that stores the position and motion database 31 is the advertisement evaluation system 1. In another embodiment, a storage device that stores the position and motion database 31 may be provided separately from the advertisement evaluation system 1. In this case, the advertisement evaluation system 1 performs the advertisement evaluation process by being provided with the pieces of position and motion data stored in the position and motion database 31 via a network from the storage device that stores the position and motion database 31.

(D3) In the first embodiment, the evaluation target range RE is designated by the user. In another embodiment, the evaluation target range RE may be set by the acquisition unit 22 to a predetermined range around the evaluation target OJ without being designated by the user. In this case, the predetermined range may be a range in which a person can view the evaluation target OJ. In the first embodiment, the evaluation target range RE for calculation of the index ratio Rm is calculated in advance, but the entire range may be set as the target.

(D4) In the sixth embodiment, the determination as to whether the passerby PD has viewed the evaluation target OJ and the determination as to whether the passerby PD has viewed the evaluation target OJ twice are made in the same processing routine. In another embodiment, the determination as to whether the passerby PD has viewed the evaluation target OJ and the determination as to whether the passerby PD has viewed the evaluation target OJ twice may be made in separate processing routines. In this case, it is appropriate to use the processing routine in FIG. 8 for the determination as to whether the passerby PD has viewed the evaluation target OJ, and to use the processing routine in FIG. 13 for the determination as to whether the passerby PD has viewed the evaluation target OJ twice. In FIG. 13, the reference period RTth used in step S108 may be set to a period shorter than the reference period RTth used in step S116. Thus, it is possible to reflect the actual situation in which, when the evaluation target OJ is viewed twice, the period of the first view of the evaluation target OJ is shorter than the period of the second view of the evaluation target OJ. For the same reason, it is appropriate that the reference period RTth used in the processing routine for the determination as to whether the passerby PD has viewed the evaluation target OJ, that is, step S108 in FIG. 8, be set approximately equal to the period of the second view of the evaluation target OJ. A processing step for determining that the evaluation target OJ has been viewed twice when the angular velocity that is the detected value from the motion sensor 81 in the case of the second view of the evaluation target OJ is more than a predetermined reference velocity may be added to the processing routine shown in FIG. 13. Thus, it is possible to reflect the actual situation in which, when the evaluation target OJ is viewed twice, the head moving speed increases to view the evaluation target OJ again. Therefore, it is possible to increase the accuracy of detection as to whether the evaluation target OJ has been viewed twice.

(D5) In the first embodiment, the estimated number of people Nm is determined by determining whether the people have turned their faces to the evaluation target OJ in the index ratio calculation process. In another embodiment, the index ratio calculation process may additionally include a step of determining whether the walking speed of the passerby PD is less than a predetermined reference speed. Specifically, the acquisition unit 22 determines that the passerby PD is viewing the evaluation target OJ when determination is made that the speed indicated by the acceleration that is the detected value from the motion sensor 81 is less than the reference speed in the posture in which the passerby PD directs the face to the evaluation target OJ. Thus, it is possible to reflect the actual situation in which the walking speed decreases when a person views the evaluation target OJ. The predetermined reference speed is, for example, about 1 km/h.

(D6) In the first embodiment, the estimated number of people Nm is counted when one passerby PD has viewed the evaluation target OJ at least once. In another embodiment, the estimated number of people Nm may be counted also when the passerby PD has left the evaluation target range RE and then re-entered the evaluation target range RE. For example, when the passerby PD has viewed the evaluation target OJ, left the evaluation target range RE, re-entered the evaluation target range RE, and viewed the evaluation target OJ, the estimated number of people Nm may be counted as "2." Further, when the passerby PD has entered and left the evaluation target range RE multiple times, the user may be allowed to select whether to count the estimated number of people Nm.

(D7) In the seventh embodiment, in step S58, the index ratio calculation process is performed on each of the plurality of outer walls. In another embodiment, step S100 of the index ratio calculation process need not be performed multiple times. Therefore, the processing routine from step S104 to step S120 in FIG. 8 may be performed on each of the plurality of outer walls.

The present disclosure is not limited to the embodiments described above, and can be implemented in various configurations without departing from the spirit thereof. For example, the technical features in the embodiments corresponding to the technical features in the aspects described in SUMMARY OF THE INVENTION can be replaced or combined as appropriate to solve some or all of the problems described above or to achieve some or all of the effects described above. Unless the technical features are described as being essential herein, they can be omitted as appropriate.

### Description of the Reference Numerals

1 ... advertisement evaluation system, 20 ... processor, 21 ... reception unit, 22 ... acquisition unit, 30 ... storage unit, 31 ... position and motion database, 32 ... advertisement evaluation program, 33 ... map information, 40 ... communication interface, 50 ... input/output interface, 51 ... display unit, 52 ... input device, 80 ... ear-attached device, 80a ... housing, 81 ... motion sensor, 82 ... sound conversion unit, 84 ... communication interface, 90 ... mobile terminal device, 91 ... processor, 92 ... storage unit, 93 ... display operation unit, 94 ... position information acquisition unit, 95 ... communication interface, 96 ... information provision application program, AD ... advertisement, BU ... building, CN ... midpoint, OJ ... evaluation target, PD ... passerby, RE ... evaluation target range, Rm ... index ratio

## Claims

1. An advertisement evaluation system comprising:
a reception unit that receives designation of an evaluation target on which an advertisement is placeable;
an acquisition unit that determines an estimated number of people who are estimated to have viewed the evaluation target using a position and motion data aggregate that is an aggregate of position and motion data in which position information of a person is associated with motion information indicating a motion of a head of the person; and
a display unit that displays number-of-people information related to the estimated number of people.

2. The advertisement evaluation system according to claim 1, wherein the acquisition unit performs
a first process of setting an evaluation target range around the evaluation target, and
a second process of determining, as the estimated number of people, the number of people who are estimated to have viewed the evaluation target among people located in the evaluation target range.

3. The advertisement evaluation system according to claim 2, wherein:
in the second process, the acquisition unit divides the evaluation target into a plurality of levels based on a height from a ground, and determines the estimated number of people for each of the plurality of levels; and
the display unit displays the number-of-people information corresponding to each of the plurality of levels.

4. The advertisement evaluation system according to claim 2, wherein:
the reception unit further receives designation of an evaluation period; and
in the second process, the acquisition unit determines, as the estimated number of people, the number of people who are estimated to have viewed the evaluation target among people located in the evaluation target range during the evaluation period.

5. The advertisement evaluation system according to claim 2, wherein:
the acquisition unit performs a third process of determining an index ratio by determining a total number of people located in the evaluation target range and dividing the estimated number of people by the total number of people; and
the number-of-people information includes the index ratio.

6. The advertisement evaluation system according to claim 2, wherein:
the motion information includes information acquired by an angular velocity sensor; and
in the second process, the acquisition unit estimates that the person has viewed the evaluation target when a period during which a value of the angular velocity sensor is within a predetermined reference range is equal to or more than a predetermined reference period after determination is made that a face of the person has been turned to the evaluation target.

7. The advertisement evaluation system according to claim 6, wherein:
the estimated number of people is a first estimated number of people, and the number-of-people information is first number-of-people information;
the acquisition unit performs an estimation process of determining a second estimated number of people who are estimated to have viewed the evaluation target twice among the people who are estimated to have viewed the evaluation target; and
the display unit displays second number-of-people information related to the second estimated number of people.

8. The advertisement evaluation system according to claim 5, wherein the display unit displays the index ratio using at least one of a contour diagram and a vector diagram.

9. An advertisement evaluation method comprising:
(a) receiving designation of an evaluation target on which an advertisement is placeable;
(b) determining an estimated number of people who are estimated to have viewed the evaluation target using a position and motion data aggregate that is an aggregate of position and motion data in which position information of a person is associated with motion information indicating a motion of a head of the person; and
(c) displaying number-of-people information related to the estimated number of people.
